# EUROPEAN PATENT APPLICATION

(11) **EP 4 425 636 A1**
(43) Date of publication of application: **04.09.2024**
(21) Application number: 23892749.5
(22) Date of filing: 03.01.2023
(51) Int. Cl.: H01M 10/058

(54) **APPARATUS AND METHOD FOR ASSEMBLING BATTERY CELLS**

(71) Applicant: Contemporary Amperex Technology Co., Limited, Ningde City, Fujian 352100 (CN)
(72) Inventor: ZHENG, Zhijian, Ningde City Fujian 352100 (CN); FAN, Xiang, Ningde City Fujian 352100 (CN); LIN, Gang, Ningde City Fujian 352100 (CN); PENG, Yuan, Ningde City Fujian 352100 (CN); HONG, Chang, Ningde City Fujian 352100 (CN); NIE, Wenqing, Ningde City Fujian 352100 (CN); ZHOU, Yuqun, Ningde City Fujian 352100 (CN)
(74) Representative: Gong, Jinping
(86) International application number: PCT/CN2023/070156
(87) International publication number: WO 2024/145759

(57) **Abstract**

An embodiment of this application provides a device and method for assembling a battery cell. The device includes: a conveyance mechanism, configured to fix an electrode assembly and convey the electrode assembly to a coating station; a coating mechanism, configured to coat at least a part of an outer surface of the electrode assembly with an insulation layer at the coating station, where the conveyance mechanism is further configured to: convey the electrode assembly coated with the insulation layer to an encasing station; and an encasing mechanism, configured to fit, at the encasing station, a housing peripherally onto the electrode assembly coated with the insulation layer. The device and method for assembling a battery cell disclosed herein can improve the assembling efficiency of battery cells.

## Description

### TECHNICAL FIELD

This application relates to the technical field of batteries, and in particular, to a device and method for assembling a battery cell.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

With the development of the battery technology, the performance of a battery is not only affected by the battery material, but is also crucially bottlenecked by the manufacturing process of the battery. Therefore, how to improve the processing and production efficiency of batteries is one of the key challenges in the battery field.

### SUMMARY

Some embodiments of this application provide a device and method for assembling a battery cell to improve the assembling efficiency of battery cells.

According to a first aspect, a device for assembling a battery cell is provided, including: a conveyance mechanism, configured to fix an electrode assembly and convey the electrode assembly to a coating station; a coating mechanism, configured to coat at least a part of an outer surface of the electrode assembly with an insulation layer at the coating station, where the conveyance mechanism is further configured to: convey the electrode assembly coated with the insulation layer to an encasing station; and an encasing mechanism, configured to fit, at the encasing station, a housing peripherally onto the electrode assembly coated with the insulation layer.

The device for assembling a battery cell according to this embodiment of this application fixes the electrode assembly and conveys the electrode assembly between different workstations through the conveyance mechanism to implement the processes such as coating the electrode assembly with the insulation layer and encasing the electrode assembly in the housing, thereby avoiding the need to repeatedly change the transport tool during the handling and conveyance of the electrode assembly. This simplifies the assembling process of the battery cell, improves the assembling efficiency of the battery cell, reduces the damage to the electrode assembly that may be caused by an external force in a case of using different transport tools, improves the qualification rate of battery cells, and in turn, improves the yield rate of the battery.

In some embodiments, the conveyance mechanism is configured to carry the electrode assembly and an end cap. The end cap is attached to a first end face of the electrode assembly. A carrier surface of the conveyance mechanism is attached to a surface of the end cap, the surface being away from the electrode assembly. The electrode assembly is placed on the conveyance mechanism along a first direction, where the first direction is perpendicular to the first end face. The conveyance mechanism can simultaneously convey the electrode assembly and the end cap to perform the subsequent assembling process, thereby improving the processing and assembling efficiency of the battery cell.

In some embodiments, the coating mechanism is configured to: control the insulation layer to move along the first direction so that the insulation layer approaches the electrode assembly and coats at least a part of the outer surface of the electrode assembly. The electrode assembly is placed on the conveyance mechanism along the first direction. Therefore, the coating mechanism controls the insulation layer to move along the first direction and gradually approach the electrode assembly, so that the insulation layer can coat the electrode assembly from an end face of the electrode assembly, the end face being disposed opposite to the first end face. The coating process is simple and easy to implement. In addition, the outer surface of the electrode assembly can be coated with the insulation layer without turning the electrode assembly over while the electrode assembly keeps being placed on the conveyance mechanism along the first direction.

In some embodiments, the encasing mechanism is configured to: orient an opening of the housing toward the electrode assembly, and control the housing to move along the first direction so that the electrode assembly coated with the insulation layer enters the housing from the opening. An opening is created on the housing. The electrode assembly coated with the insulation layer is disposed on the conveyance mechanism along the first direction. The encasing mechanism controls the housing to move along the first direction and gradually approach the electrode assembly, and the opening of the housing is oriented toward the electrode assembly. Therefore, without turning over the electrode assembly, the housing can be fitted peripherally onto the electrode assembly coated with the insulation layer, so as to implement the encasing process of the electrode assembly. The process is simple and easy to implement.

In some embodiments, the conveyance mechanism includes: a clamping assembly, configured to clamp the electrode assembly along a second direction, where the second direction is perpendicular to the first direction; a driving assembly, configured to apply a driving force to the clamping assembly along a third direction so that the clamping assembly is configured to release the electrode assembly under the driving force.

The clamping assembly clamps the electrode assembly along the second direction, and the second direction is perpendicular to the first direction, and therefore, in a case that the first direction is perpendicular to the first end face, the second direction is parallel to the first end face. This ensures that, when the clamping assembly clamps the electrode assembly, the first end face of the electrode assembly is still oriented toward the carrier surface without being interfered with. Therefore, when the electrode assembly is placed on the conveyance mechanism, the electrode assembly is not only subjected to its own gravity, but also subjected to a clamping force along the second direction, thereby further ensuring the stability of the electrode assembly on the conveyance mechanism.

In some embodiments, a conveyance direction in which the conveyance mechanism conveys the electrode assembly coated with the insulation layer from the coating station to the encasing station is different from the third direction.

If the conveyance direction of the conveyance mechanism in conveying the electrode assembly is the same as the third direction, the driving assembly is likely to affect the conveyance of the conveyance mechanism. For example, the conveyance mechanism that is conveying the electrode assembly needs to be dodged, thereby increasing the difficulty in the design of the driving assembly. Conversely, if the conveyance direction of the conveyance mechanism in conveying the electrode assembly is different from the third direction, the driving assembly causes no hindrance to the movement of the conveyance assembly, thereby facilitating the arrangement of the driving assembly.

In some embodiments, the clamping assembly includes: two clamping modules spaced apart along the second direction, where the electrode assembly is located between the two clamping modules; and a moving module movably linked with the two clamping modules. The two clamping modules are configured to: when the moving module moves along the third direction, move away from each other along the second direction to release the electrode assembly, or move closer to each other along the second direction to clamp the electrode assembly. The third direction is different from the second direction.

The two clamping modules are set to be movably linked with the moving module, so that the movement of the two clamping modules can be driven by the movement of the moving module, thereby enabling the clamping modules to clamp and release the electrode assembly, and facilitating the mounting and removal of the electrode assembly. In addition, the movement direction of the moving module is the third direction, and the third direction is different from the second direction, thereby making it more flexible and easier to position the moving module.

In some embodiments, the clamping assembly includes: a retaining structure, where the retaining structure is connected to the moving module. The retaining structure is configured to retain the moving module in a target position. The two clamping modules are configured to clamp the electrode assembly along the second direction when the moving module is located in the target position. Under the action of the retaining structure, the moving module is located in the target position. Correspondingly, the two clamping modules are located close to each other, thereby enabling the two clamping modules to clamp the electrode assembly along the second direction.

In some embodiments, the retaining structure includes a spring extending along the third direction. When the spring is not subjected to an external force, the spring is automatically restored to its original state, and pushes the moving module to settle in the target position, thereby enabling the two clamping modules to clamp the electrode assembly. The structure is simple and easy to implement.

In some embodiments, the spring is configured to: be compressed along the third direction when the driving assembly applies a driving force to the moving module along the third direction, and be restored to an original position along the third direction when the driving assembly stops applying the driving force to the moving module. The spring structure can deform under the driving force and, when the driving force stops acting, be restored to its original form so that the moving module returns to the target position. The structure is simple and is easy to implement.

In some embodiments, the moving module includes a slide slot structure. Each clamping module of the at least two clamping modules includes a protrusion structure. At least a part of the protrusion structure is accommodated in the slide slot structure and moves in the slide slot structure. The slide slot structure accommodates at least a part of the protrusion structure so that the protrusion structure can slide in the slide slot structure. In this way, with reasonable design of the slide slot structure, the two clamping modules with a protrusion structure are enabled to be movably linked to the moving module with a slide slot structure. The structure is simple and easy to implement.

In some embodiments, an extension direction of the slide slot structure is different from the third direction and different from the second direction. In this way, when the driving assembly applies a driving force to the moving module along the third direction, the two clamping modules can move along the second direction different from the third direction by virtue of the setting of the extension direction of the slide slot structure.

In some embodiments, the moving module includes two slide slot structures. The two slide slot structures correspond to the protrusion structures of the at least two clamping modules one to one. Considering that an electrode assembly is disposed between the two clamping modules according to this embodiment of this application, the two clamping modules are at a distance from each other. Correspondingly, the two protrusion structures of the two clamping modules are also at a distance from each other. Therefore, two slide slot structures can be disposed to accommodate the two protrusion structures respectively. In this way, the two slide slot structures are free from mutual interference, thereby improving the structural reliability.

In some embodiments, the two slide slot structures are at equal angles to the second direction. Considering that the two clamping modules usually need to move synchronously, for example, approach each other or depart from each other, the two slide slot structures may be made to be at equal angles to the second direction. In this way, the protrusion structures of the two clamping modules move synchronously, thereby synchronizing the movement of the two clamping modules, and improving the clamping efficiency of the two clamping modules.

In some embodiments, each of the two clamping modules is configured to clamp two second end faces of the electrode assembly. The two second end faces are disposed opposite to each other and perpendicular to the first end face. The two clamping modules clamp the two opposite second end faces of the electrode assembly, so that the clamping force exerted on the electrode assembly is relatively uniform, thereby keeping the balance of the electrode assembly on the carrier surface, and improving the stability of the electrode assembly on the conveyance mechanism.

In some embodiments, the clamping assembly further includes: a carrier module. The carrier module and the moving module are stacked along the first direction, and the carrier module is close to the electrode assembly. A surface, oriented toward the electrode assembly, of the carrier module is the carrier surface. Disposing the carrier module between the moving module and the electrode assembly facilitates the carrier module to carry the electrode assembly without affecting the movement of the moving module under the driving force of the driving assembly. The structure is easy to implement.

In some embodiments, the driving assembly is disposed at the coating station and/or the encasing station. At the coating station, the coating mechanism coats at least a part of an outer surface of the electrode assembly with an insulation layer. Considering that the first end face of the electrode assembly is not necessarily coated with the insulation layer but all other end faces of the electrode assembly need to be coated with the insulation layer, the end faces of the electrode assembly clamped by the two clamping modules may also need to be coated with the insulation layer. In this case, the driving assembly disposed at the coating station may exert a driving force to make the clamping modules release the electrode assembly, so as to coat the outer surface of the electrode assembly with the insulation layer. At the encasing station, the electrode assembly coated with the insulation layer enters the interior of the housing from the opening of the housing. Therefore, the driving assembly disposed at the encasing station may exert a driving force to make the two clamping modules release the electrode assembly, so as to let the electrode assembly into the housing.

In some embodiments, the third direction is perpendicular to the first direction. Therefore, when the moving module moves as driven by a driving force, the electrode assembly can still remain relatively stable on the carrier surface under its own gravity, thereby preventing the position of the electrode assembly from being affected by the movement of the moving module.

In some embodiments, the third direction is perpendicular to the second direction. In this way, the movement direction of the moving module is perpendicular to the movement direction of the clamping modules, thereby avoiding mutual interference with respect to the movement position. In addition, when the driving assembly applies a driving force along the third direction, no hindrance is caused to the movement of the two clamping modules. The structure design is simplified and easy to implement.

According to a second aspect, a method for assembling a battery cell is provided, including: conveying an electrode assembly fixed to a conveyance mechanism to a coating station; coating at least a part of an outer surface of the electrode assembly with an insulation layer at the coating station; conveying the electrode assembly coated with the insulation layer to an encasing station through the conveyance mechanism; and fitting, at the encasing station, a housing peripherally onto the electrode assembly coated with the insulation layer.

In some embodiments, the conveyance mechanism is configured to carry the electrode assembly and an end cap. The end cap is attached to a first end face of the electrode assembly. A carrier surface of the conveyance mechanism is attached to a surface of the end cap, the surface being away from the electrode assembly. The electrode assembly is placed on the conveyance mechanism along a first direction, where the first direction is perpendicular to the first end face.

In some embodiments, the conveyance mechanism includes a clamping assembly and a driving assembly. The clamping assembly is configured to clamp the electrode assembly along a second direction, where the second direction is perpendicular to the first direction. The driving assembly is configured to apply a driving force to the clamping assembly along a third direction so that the clamping assembly is configured to release the electrode assembly under the driving force.

In some embodiments, a conveyance direction in which the conveyance mechanism conveys the electrode assembly coated with the insulation layer from the coating station to the encasing station is different from the third direction.

In some embodiments, the clamping assembly is configured to clamp two second end faces of the electrode assembly. The two second end faces are disposed opposite to each other and perpendicular to the first end face.

In some embodiments, neither the first end face nor the second end faces is a largest-area end face of the electrode assembly.

### BRIEF DESCRIPTION OF DRAWINGS

FIG. 1 is a schematic block diagram of a device for assembling a battery cell according to an embodiment of this application;
FIG. 2 is a schematic exploded view of a battery cell according to an embodiment of this application;
FIG. 3 is a schematic structural diagram of a conveyance mechanism according to an embodiment of this application;
FIG. 4 is a schematic structural diagram of a conveyance mechanism that clamps an electrode assembly according to an embodiment of this application;
FIG. 5 is a schematic structural diagram of a conveyance mechanism that releases an electrode assembly according to an embodiment of this application;
FIG. 6 is a schematic diagram of a partial structure of a conveyance mechanism according to an embodiment of this application;
FIG. 7 is a schematic top view of a partial structure of a conveyance mechanism according to an embodiment of this application;
FIG. 8 is a schematic top view of another partial structure of a conveyance mechanism according to an embodiment of this application;
FIG. 9 is a schematic top view of still another partial structure of a conveyance mechanism according to an embodiment of this application;
FIG. 10 is a schematic top view of a partial structure of another conveyance mechanism according to an embodiment of this application;
FIG. 11 is a schematic diagram of a partial structure of a coating mechanism according to an embodiment of this application;
FIG. 12 is a schematic diagram of a partial structure of an encasing mechanism according to an embodiment of this application;
FIG. 13 is a schematic block diagram of another device for assembling a battery cell according to an embodiment of this application; and
FIG. 14 is a schematic flowchart of a method for assembling a battery cell according to an embodiment of this application.

The drawings are not drawn to scale.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

The battery mentioned in this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

In some embodiments, a battery cell may include types such as a lithium-ion secondary battery, a lithium-ion primary battery, a lithium-sulfur battery, a sodium-lithium-ion battery, a sodium-ion battery, or a magnesium-ion battery. The type of the battery cell is not limited herein. Typically, a battery cell is briefly referred to as a cell. The battery cell may be in the shape of a cylinder, a flat body, a cuboid, or another regular or irregular shape. The technical solution disclosed in an embodiment of this application is applicable to battery cells of any shape.

A battery cell includes an electrode assembly and an electrolyte solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the current collector, a part not coated with the positive active material layer protrudes from a part coated with the positive active material layer, and the part not coated with the positive active material layer serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the current collector, a part not coated with the negative active material layer protrudes from a part coated with the negative active material layer, and the part not coated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together. The separator may be made of a material such as polypropylene (Polypropylene, PP) or polyethylene (Polyethylene, PE).

The development of the battery technology needs to consider a plurality of design factors, including performance metrics such as energy density, cycle life, discharge capacity, charge rate, and discharge rate, and also needs to consider the processing efficiency and yield rate of the batteries. For example, the processing efficiency of batteries may be improved by improving the processing efficiency of battery cells.

The production process of a battery cell is very sophisticated. For example, the production process typically includes a processing and assembling process of an electrode assembly, the fitting between the electrode assembly and the end cap, the fitting of the electrode assembly into a housing, the fitting between the housing and an end cap, and the like. Therefore, the production efficiency of the battery cell drastically restricts the production efficiency of batteries. Moreover, if the manufacturing process of battery cells is not sound, the yield rate of the battery cells will decline in the manufacturing process, or, the battery cells may incur some defects or performance problems, and even have a shorter service life, thereby impairing the performance of the battery. Therefore, how to effectively improve the production efficiency and product yield rate of battery cells is one of the key challenges in the battery field.

In view of this, an embodiment of this application provides a device for assembling a battery cell. The device includes a conveyance mechanism. Through the conveyance mechanism, an electrode assembly is fixed, and conveyed between different workstations. The conveyance mechanism conveys the electrode assembly to a coating station. At the coating station, a coating mechanism coats at least a part of an outer surface of the electrode assembly with an insulation layer. The conveyance mechanism conveys the electrode assembly coated with the insulation layer to an encasing station. At the encasing station, the encasing mechanism fits a housing peripherally onto the electrode assembly coated with the insulation layer. In this way, the conveyance mechanism conveys the electrode assembly to different workstations sequentially to implement the processes such as coating the electrode assembly with the insulation layer and encasing the electrode assembly in the housing, thereby avoiding the need to repeatedly change the transport tool during the handling and conveyance of the electrode assembly. This simplifies the assembling process of the battery cell, improves the assembling efficiency of the battery cell, reduces the damage to the electrode assembly that may be caused by an external force in a case of using different transport tools, improves the qualification rate of battery cells, and in turn, improves the yield rate of the battery.

The technical solutions described in this embodiment of this application are applicable to various electrical devices that use a battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

To meet different power usage requirements, the battery may include a plurality of battery cells. The plurality of battery cells may be connected in series, parallel, or series-and-parallel pattern. The series-and-parallel pattern means a combination of series connection and parallel connection. The battery may also be referred to as a battery pack. Optionally, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery.

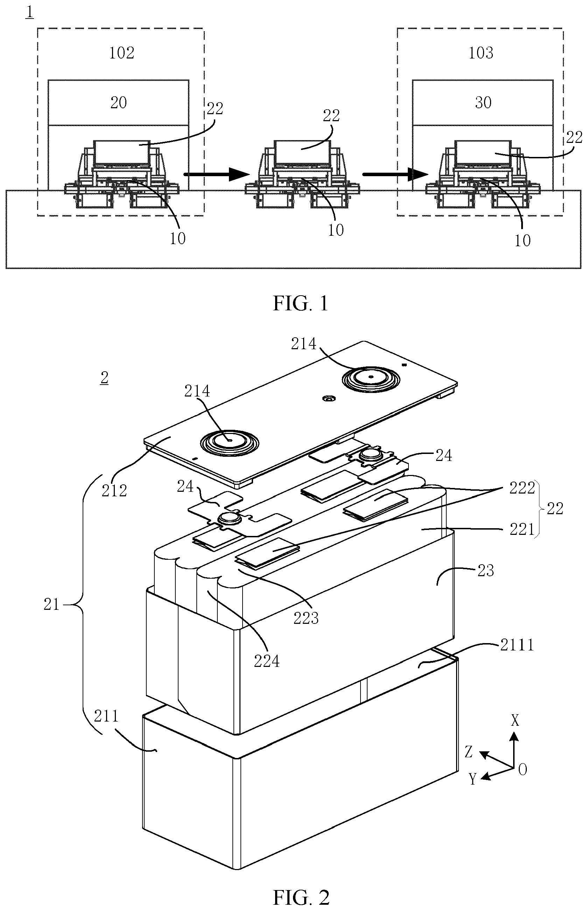

FIG. 1 is a schematic block diagram of a device 1 for assembling a battery cell 2 according to an embodiment of this application. As shown in FIG. 1, the device 1 according to this embodiment of this application includes: a conveyance mechanism 10, configured to fix an electrode assembly 22 and convey the electrode assembly 22 to a coating station 102; a coating mechanism 20, configured to coat at least a part of an outer surface of the electrode assembly 22 with an insulation layer 23 at the coating station 102, where the conveyance mechanism 10 is further configured to: convey the electrode assembly 22 coated with the insulation layer 23 to an encasing station 103; and an encasing mechanism 30, configured to fit, at the encasing station 103, a housing 211 peripherally onto the electrode assembly 22 coated with the insulation layer 23.

Therefore, the device 1 according to this embodiment of this application conveys the electrode assembly 22 to different workstations sequentially through the conveyance mechanism 10. For example, the conveyance mechanism 10 may convey the electrode assembly 22 to a coating station 102. At the coating station 102, a coating mechanism 20 coats at least a part of an outer surface of the electrode assembly 22 with an insulation layer 23. Subsequently, the conveyance mechanism 10 may convey the electrode assembly 22 coated with the insulation layer 23 to an encasing station 103. At the encasing station 103, the encasing mechanism 30 fits a housing 211 peripherally onto the electrode assembly 22 coated with the insulation layer 23. In this process, the conveyance mechanism 10 conveys the electrode assembly 22, thereby avoiding the need to repeatedly change the transport tool, simplifying the assembling process of the battery cell 2, improving the assembling efficiency of the battery cell 2, reducing the damage to the electrode assembly 22 that may be caused by an external force in a case of using different transport tools, improving the qualification rate of battery cells 2, and in turn, improving the yield rate of the battery cells.

Understandably, the device 1 according to this embodiment of this application may be configured to assemble a battery cell 2. The structure of the battery cell 2 may be flexibly designed depending on actual applications. For example, FIG. 2 is a possible schematic exploded view of a battery cell 2 according to an embodiment of this application. The following describes the structure of the battery cell 2, using FIG. 2 as an example. As shown in FIG. 2, the battery cell 2 may include one or more electrode assemblies 22 and a shell 21 configured to accommodate the electrode assembly 22.

Understandably, as shown in FIG. 2, the shell 21 in this embodiment of this application may assume a polyhedral structure. Specifically, the shell 21 may include a housing 211 and an end cap 212. The housing 211 may be a hollow structure opened at least at one end. The shape of the end cap 212 may be adapted to the shape of the housing 211. The end cap 212 is configured to fit and cover the opening of the housing 211 so that the shell 21 isolates the internal environment of the battery cell 2 from the external environment. If the housing 211 is a hollow structure opened at one end, one end cap 212 may be disposed, as shown in FIG. 2, for example. Alternatively, if the housing 211 is a hollow structure opened at two opposite ends, two end caps 212 may be disposed. The two end caps 212 fit and cover the openings at the two ends of the housing 211 respectively.

The housing 211 in this embodiment of this application may be made of a variety of materials such as copper, iron, aluminum, steel, or aluminum alloy. The end cap 212 may be made of a variety of materials such as copper, iron, aluminum, steel, or an aluminum alloy. The material of the end cap 212 may be identical to or different from the material of the housing 211.

The shell 21 in this embodiment of this application may be in various shapes such as a cylinder or cuboid. The shape of the housing 211 and the shape of the end cap 212 are adapted to each other. For example, as shown in FIG. 2, the housing 211 is a cuboidal structure, and the end cap 212 is a rectangular plate structure adapted to the housing 211.

For ease of description, this application is described by using an example in which the shell 21 is cuboidal. Specifically, as shown in FIG. 2, the shell 21 includes: a housing 211, where the housing 211 is a hollow structure opened at one end; and an end cap 212, where the end cap 212 is configured to fit and cover the opening of the housing 211 to form a closed cavity in which the electrode assembly 22 is placed.

In the battery cell 2, the interior of the housing 211 is configured to accommodate an electrode assembly 22. In addition, depending on actual use requirements, the number of electrode assemblies 22 in the housing 211 may be one or more. For example, FIG. 2 shows an example in which the battery cell 2 includes four electrode assemblies 22 arranged along the thickness direction Z of the electrode assemblies 22, but the embodiments of this application are not limited to the example.

The electrode assembly 22 in an embodiment of this application is a component in which electrochemical reactions occur in the battery cell 2. The electrode assembly 22 may be cylindrical, cuboidal, or the like. If the electrode assembly 22 is cylindrical, the housing 211 may be cylindrical accordingly. If the electrode assembly 22 is cuboidal, the housing 211 may be cuboidal accordingly.

For any electrode assembly 22, the electrode assembly 22 may include a tab 222 and a main portion 221. Specifically, as shown in FIG. 2, the electrode assembly 22 may include at least two tabs 222. The at least two tabs 222 may include at least one positive tab and at least one negative tab. The positive tab may be a stacked part, uncoated with a positive active material layer, on a positive electrode plate; and the negative tab may be a stacked part, uncoated with a negative active material layer, on a negative electrode plate.

Further, electrode terminals 214 are disposed on the shell 21 in an embodiment of this application. The electrode terminals 214 are configured to be electrically connected to the electrode assembly 22 to output electrical energy of the battery cell 2. As shown in FIG. 2, the battery cell 2 may further include at least two electrode terminals 214. The at least two electrode terminals 214 may be disposed on the same wall or different walls of the battery cell 2. For example, FIG. 2 shows an example in which the battery cell 2 includes two electrode terminals 214, and both of the two electrode terminals 214 are disposed on the end cap 212. The end cap 212 is typically in the shape of a flat plate. Two electrode terminals 214 are fixed onto a flat surface of the end cap 212. The two electrode terminals 214 are a positive electrode terminal and a negative electrode terminal respectively. A connecting member 24 is disposed corresponding to each electrode terminal 214. The connecting member 24 is located between the end cap 212 and the electrode assembly 22, and configured to electrically connect the electrode assembly 22 and the electrode terminal 214. Specifically, as shown in FIG. 2, the positive tab of the electrode assembly 22 may be connected to a positive electrode terminal by one connecting member 24. The negative tab of the electrode assembly 22 is connected to a negative electrode terminal by another connecting member 24.

Understandably, the battery cell 2 according to an embodiment of this application further includes an insulation layer 23. The insulation layer 23 is a hollow structure on which at least one opening is created. For example, as shown in FIG. 2, this application describes a typical example in which one opening is created on the insulation layer 23. In addition, the opening is oriented toward the end cap 212. The insulation layer 23 is disposed between the housing 211 and the electrode assembly 22. The hollow structure of the insulation layer 23 is configured to accommodate the electrode assembly 22, so that the insulation layer 23 coats at least a part of an outer surface of the electrode assembly 22. The insulation layer 23 may be configured to maintain electrical insulation between the electrode assembly 22 and an inner wall of the housing 211. For example, the insulation layer 23 may be a thin-film cover layer made of an insulating material, and may coat at least a part of the outer surface of the electrode assembly 22. Specifically, the insulation layer 23 may be a sheet structure before coating the electrode assembly 22. The coating mechanism 20 makes a hollow opened structure of the insulation layer that coats the outer surface of the electrode assembly 22.

In an embodiment of this application, the shape of the insulation layer 23 may be determined depending on the shape of the electrode assembly 22 or the shape of the housing 211. For example, in an embodiment of this application, the insulation layer 23 may be, but is not limited to, a cuboidal shape.

Optionally, other components may be disposed on the shell 21 of the battery cell 2 in an embodiment of this application. For example, as shown in FIG. 2, the battery cell 20 may further include a pressure relief mechanism.

Understandably, the assembling process of the battery cell 2 may be designed flexibly as required in practical applications in view of the structural characteristics of the battery cell 2. The following describes the assembling process of some components of the battery cell 2, using the battery cell 2 shown in FIG. 2 as an example.

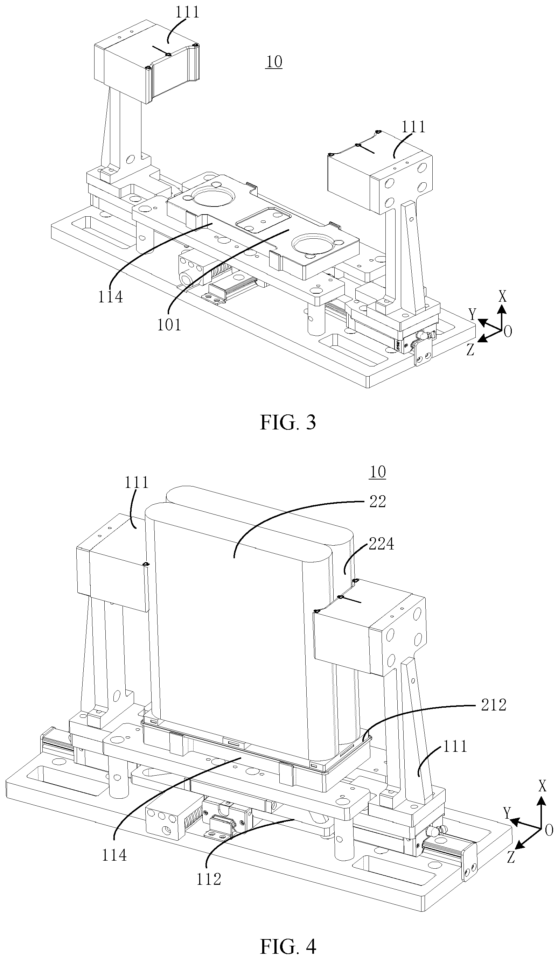

As shown in FIG. 1 and FIG. 2, the device 1 according to an embodiment of this application may include a conveyance mechanism 10. The conveyance mechanism 10 is configured to fix and convey an electrode assembly 22. FIG. 3 is a schematic structural diagram of a conveyance mechanism 10 according to an embodiment of this application, and FIG. 4 is a schematic structural diagram of a conveyance mechanism 10 to which an electrode assembly 22 is fixed according to an embodiment of this application. For example, the conveyance mechanism 10 shown in FIG. 4 may be the conveyance mechanisms 10 shown in FIG. 1 and FIG. 3.

As shown in FIG. 3 and FIG. 4, the conveyance mechanism 10 includes a carrier surface 101 configured to carry the electrode assembly 22. A first end face 223 of the electrode assembly 22 faces the carrier surface 101 so that the electrode assembly 22 is placed on the conveyance mechanism 10 along a first direction X. The first direction X is perpendicular to the first end face 223. On the one hand, the insulation layer 23 usually does not need to coat the entire surface of the electrode assembly 22 when the insulation layer 23 is applied. For example, the insulation layer 23 may not need to coat a first end face 223 of the electrode assembly 22. Therefore, when the conveyance mechanism 10 conveys the electrode assembly 22, the first end face 223 that does not need to be coated with the insulation layer 23 can be oriented toward the carrier surface 101 without interfering with the coating process of the insulation layer 23. Therefore, the electrode assembly 22 does not need to be turned over when applying the insulation layer 23, thereby avoiding damage to the electrode assembly 22. On the other hand, the first end face 223 is oriented toward the carrier surface 101, and the electrode assembly 22 is disposed on the conveyance mechanism 10 along the first direction X. This enables the electrode assembly 22 to be placed on the conveyance mechanism 10 by virtue of the gravity of the electrode assembly, thereby facilitating placement of the electrode assembly and improving the stability of the electrode assembly 22 on the conveyance mechanism 10.

Optionally, the first end face 223 according to this embodiment of this application may be any one of the surfaces of the electrode assembly 22 that do not need to be coated with the insulation layer 23. For example, the first end face 223 may be an end face of the electrode assembly 22, the end face on which a tab 222 is disposed. Alternatively, the tab 222 may be disposed on another end face. The position of the tab is not limited herein.

Optionally, considering the processing sequence of the battery cell 2, the conveyance mechanism 10 may be further configured to carry other components of the battery cell 2. For example, the conveyance mechanism 10 is configured to carry the electrode assembly 22 and an end cap 212. The end cap 212 is attached to a first end face 223 of the electrode assembly 22. A carrier surface 101 of the conveyance mechanism 10 is attached to a surface of the end cap 212, the surface being away from the electrode assembly 22. The electrode assembly 22 is placed on the conveyance mechanism 10 along a first direction X, and the first direction X is perpendicular to the first end face 223. In assembling the battery cell 2, the electrode assembly 22 may be fixed to the end cap 212 first. For example, the electrode terminals 214 of the end cap 212 may be connected to the corresponding tabs 222 by a connecting member 24, so that the end cap 212 is relatively fixed to the electrode assembly 22. In this way, the end cap 212 and the electrode assembly 22 can be processed together subsequently. In other words, the conveyance mechanism 10 may be configured to carry the electrode assembly 22 and the end cap 212, where the carrier surface 101 of the conveyance mechanism 10 is in contact with a surface of the end cap 212, the surface being away from the electrode assembly 22; and a surface, close to the electrode assembly 22, of the end cap 212, is attached to the first end face 223. In this way, the conveyance mechanism 10 can simultaneously convey the electrode assembly 22 and the end cap 212 to perform the subsequent assembling process, thereby improving the processing efficiency of the battery cell 2.

Understandably, the carrier surface 101 in this embodiment of this application is a surface of the conveyance mechanism 10. The surface may be a flat and even surface that facilitates processing of the conveyance mechanism 10. Alternatively, the carrier surface 101 may be an uneven surface. For example, the form of the carrier surface 101 may be designed depending on the form of the component in contact with the carrier surface. For example, the carrier surface 101 is in contact with the surface of the end cap 212. Some protruding or recessed components may exist on a surface, away from the electrode assembly 22, of the end cap 212. Therefore, the surface, away from the electrode assembly 22, of the end cap 212 is usually uneven. Accordingly, the carrier surface 101 may also be uneven, so as to be adapted to the surface, away from the electrode assembly 22, of the end cap 212. For example, an electrode terminal 214 is disposed on the end cap 212. The electrode terminal 214 is disposed protrusively on the surface, away from the electrode assembly 22, of the end cap 212. Accordingly, a recessed region may be created on the carrier surface 101. The recessed region may be configured to accommodate the electrode terminal 214, so that the surface of the end cap 212 is adapted to the carrier surface 101. On the one hand, positioning can be implemented by using the correspondence between the protruding part and the recessed region, thereby facilitating accurate placement of the end cap 212 and the electrode assembly 22 on the carrier surface 101. In addition, this enables the end cap 212 to be more stably disposed on the carrier surface 101, thereby improving the conveyance stability of the conveyance mechanism 10. On the other hand, this reduces the abrasion caused by the carrier surface 101 onto the surface of the end cap 212, and improves the qualification rate of the battery cells 2.

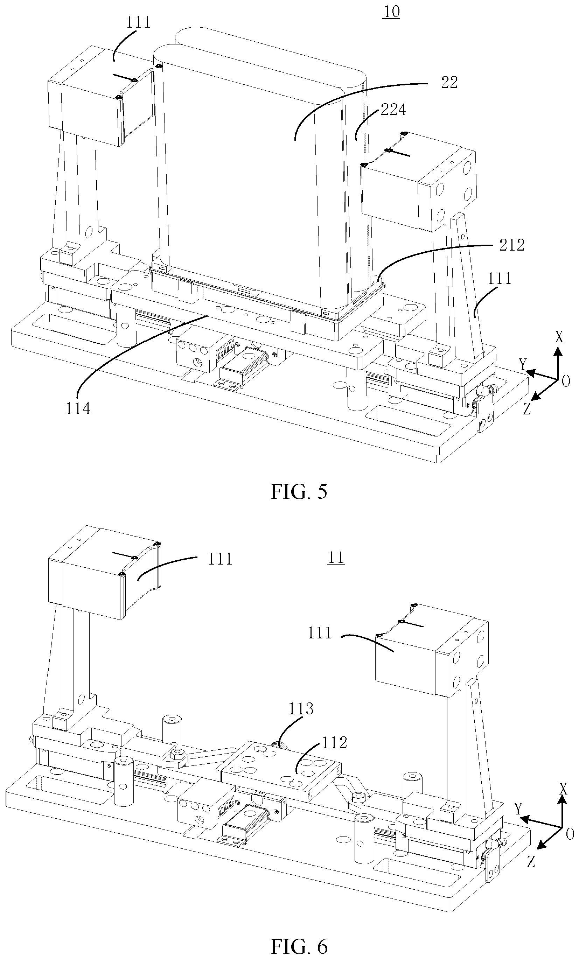

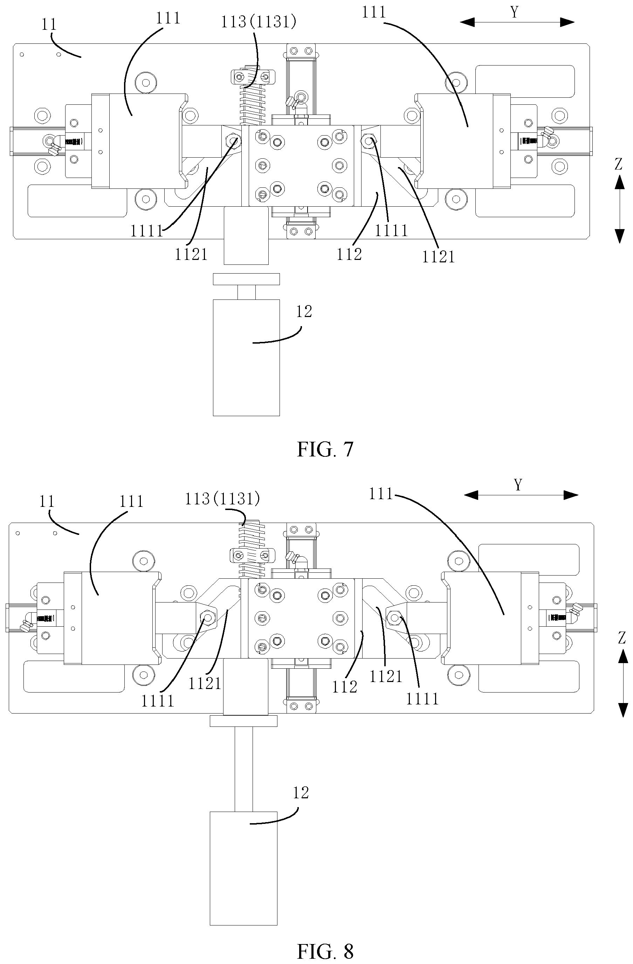

The following describes a conveyance mechanism 10 according to an embodiment of this application in detail with reference to drawings. FIG. 5 is another schematic structural diagram of a conveyance mechanism 10 on which an electrode assembly 22 is disposed according to an embodiment of this application. For example, FIG. 5 differs from FIG. 4 in that the conveyance mechanism 10 shown in FIG. 4 clamps the electrode assembly 22, but the conveyance mechanism 10 shown in FIG. 5 releases the electrode assembly 22. FIG. 6 is a schematic diagram of a partial structure of a conveyance mechanism 10 according to an embodiment of this application. For example, for the purpose of clearly showing the structure of the conveyance mechanism 10, the conveyance structure 10 shown in FIG. 6 differs from the conveyance mechanism 10 in FIG. 3 by removing a structure that is configured to carry the electrode assembly 22. FIG. 7 to FIG. 9 are schematic top views of the conveyance mechanism 10 in several different states according to some embodiments of this application. For example, FIG. 7 to FIG. 9 are schematic top views of a part of the conveyance mechanism 10 shown in FIG. 6.

As shown in FIG. 4 to FIG. 9, the conveyance mechanism 10 according to an embodiment of this application includes: a clamping assembly 11, configured to clamp the electrode assembly 22 along a second direction Y, where the second direction Y is perpendicular to the first direction X; a driving assembly 12, configured to apply a driving force to the clamping assembly 11 along a third direction Z so that the clamping assembly 11 is configured to release the electrode assembly 22 under the driving force. The clamping assembly 11 clamps the electrode assembly 22 along the second direction Y, and the second direction Y is perpendicular to the first direction X. Therefore, in a case that the first direction X is perpendicular to the first end face 223, the second direction Y is parallel to the first end face 223. This ensures that, when the clamping assembly 11 clamps the electrode assembly 22, the first end face 223 of the electrode assembly 22 is still oriented toward the carrier surface 101 without being interfered with. Therefore, when the electrode assembly 22 is placed on the conveyance mechanism 10, the electrode assembly is not only subjected to its own gravity, but also subjected to a clamping force along the second direction Y, thereby further ensuring the stability of the electrode assembly 22 on the conveyance mechanism 10. In addition, when the electrode assembly 22 needs to be removed from the conveyance mechanism 10, the clamping assembly 11 can move along the second direction Y to release the electrode assembly 22 under the driving force applied by the driving assembly 12 along the third direction Z, thereby facilitating the removal of the electrode assembly 22. Similarly, when the electrode assembly 22 needs to be placed on the conveyance mechanism 10, the clamping assembly 11 can be made to move under the driving force applied by the driving assembly 12 along the third direction Z, so that the electrode assembly 22 can be placed in the conveyance mechanism 10.

Understandably, the driving assembly 22 in this embodiment of this application applies a driving force along the third direction Z, and the third direction Z may be set flexibly depending on practical applications. For example, the third direction Z may be the same as or different from the second direction Y in which the clamping assembly 11 clamps the electrode assembly 22. If the third direction Z is set to be different from the second direction Y, the position of the driving assembly 12 can be set more flexibly to prevent the driving assembly 12 from hindering the movement process of the clamping assembly 11.

For another example, the conveyance direction in which the conveyance mechanism 10 conveys the electrode assembly 22 coated with the insulation layer 23 from the coating station 102 to the encasing station 103 is different from the third direction Z. If the conveyance direction of the conveyance mechanism 10 in conveying the electrode assembly 22 is the same as the third direction Z, the driving assembly 12 is likely to affect the conveyance of the conveyance mechanism 10. For example, when the conveyance mechanism 10 is conveying the electrode assembly 22, the conveyance mechanism 10 needs to be dodged, thereby increasing the difficulty in the design of the driving assembly 12. Conversely, if the conveyance direction of the conveyance mechanism 10 in conveying the electrode assembly 22 is different from the third direction Z, the driving assembly 12 causes no hindrance to the movement of the conveyance assembly 22, thereby facilitating the arrangement of the driving assembly 12.

Understandably, the driving assembly 12 in this embodiment of this application may be implemented in various ways. For example, as shown in FIG. 4 to FIG. 9, the driving assembly 12 may be a cylinder, but this embodiment of this application is not limited to the example.

In an embodiment of this application, the clamping assembly 11 includes: two clamping modules 111 spaced apart along the second direction Y, where the electrode assembly 22 is located between the two clamping modules 111; and a moving module 112 movably linked with the two clamping modules 111. The two clamping modules 111 are configured to: when the moving module 112 moves along the third direction Z, move away from each other along the second direction Y to release the electrode assembly 22, or move closer to each other along the second direction Y to clamp the electrode assembly 22. The third direction Z is different from the second direction Y The two clamping modules 111 are set to be movably linked with the moving module 112, so that the movement of the two clamping modules 111 can be driven by the movement of the moving module 112, thereby enabling the clamping modules 111 to clamp and release the electrode assembly 22, and facilitating the mounting and removal of the electrode assembly 22. In addition, the movement direction of the moving module 112 is the third direction Z, and the third direction Z is different from the second direction Y, thereby making it more flexible and easier to position the moving module 112.

Understandably, as shown in FIG. 7 to FIG. 9, the third direction Z in this embodiment of this application may include two opposite directions, so that the moving module 112 can reciprocate along the third direction Z. Similarly, the second direction Y in this embodiment of this application may include two opposite directions, so that each of the two clamping modules 111 can reciprocate along the second direction Y, thereby making the two clamping modules 111 approach each other or depart from each other.

How the clamping assembly 11 clamps and releases the electrode assembly 22 is described below in detail with reference to drawings. As shown in FIG. 7, the clamping assembly 11 may further include: a retaining structure 113, where the retaining structure 113 is connected to the moving module 112. The retaining structure 113 is configured to retain the moving module 112 in a target position. The two clamping modules 111 are configured to clamp the electrode assembly 22 along the second direction Y when the moving module 112 is located in the target position. In this way, under the action of the retaining structure 113, the moving module 112 is located in the target position. Correspondingly, the two clamping modules 111 are located close to each other, thereby enabling the two clamping modules 111 to clamp the electrode assembly 22 along the second direction Y

Optionally, the retaining structure 113 in this embodiment of this application may be implemented in various ways. For example, as shown in FIG. 7, the retaining structure 113 includes a spring 1131 extending along the third direction Z. When the spring 1131 is not subjected to an external force, the spring 1131 is automatically restored to its original state, and pushes the moving module 112 to settle in the target position, thereby enabling the two clamping modules 111 to clamp the electrode assembly 22. The structure is simple and easy to implement.

Optionally, the type of the spring 1131 in this embodiment of this application may be set flexibly depending on practical applications. For example, the spring 1131 may be a compression spring or a tension spring. The type of the spring is not limited herein.

In this embodiment of this application, as shown in FIG. 8, as can be seen from comparison between FIG. 8 and FIG. 7, when the driving assembly 12 gradually applies a driving force to the moving module 112 along the third direction Z, the moving module 112 moves along the third direction Z. For example, the third direction Z is a vertical upward direction shown in FIG. 8, that is, the driving assembly 12 applies a driving force to the moving module 112 along the vertical upward third direction Z shown in FIG. 8. In this case, under the action of the driving force, the moving module 112 moves along the vertical upward third direction Z correspondingly. Correspondingly, the two clamping modules 111 movably linked with the moving module 112 move away from each other along the second direction Y, so that the distance between the two clamping modules 111 increases gradually, and the clamping force of the two clamping modules 111 on the electrode assembly 22 decreases gradually.

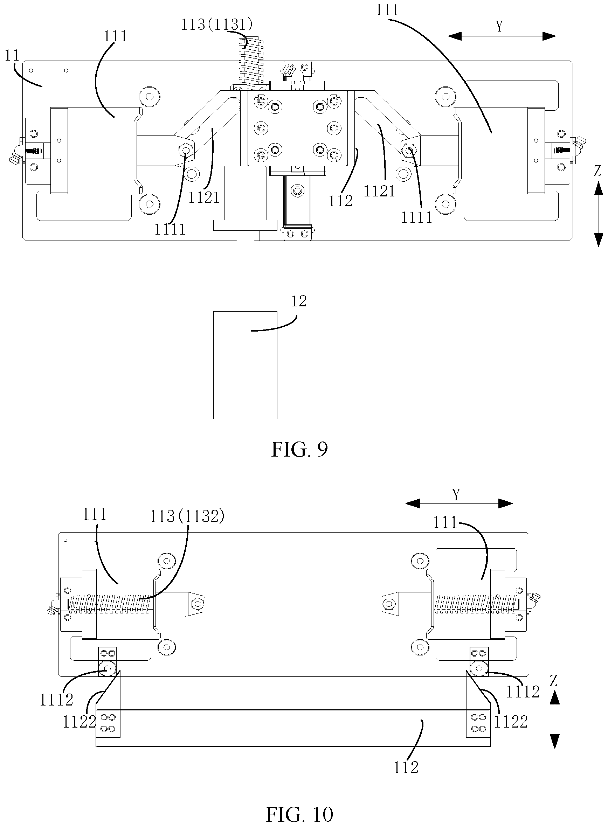

As shown in FIG. 9, as can be seen from comparison between FIG. 8 and FIG. 9, when the driving force applied by the driving assembly 12 along the vertical upward third direction Z increases gradually until the moving module 112 moves for the farthest distance along the vertical upward third direction Z, the two clamping modules 111 movably linked with the moving module 112 also move away from each other along the second direction Y until the spacing between two clamping modules is maximized. At this time, the electrode assembly 22 can be removed from between the two clamping modules 111. In other words, the electrode assembly 22 is removed from the conveyance mechanism 10.

As shown in FIG. 7 to FIG. 9, in a case that the driving force is applied by the driving assembly 12, the driving force is greater than the retaining force of the retaining structure 113, so that the moving module 112 is caused to move away from the target position. For example, using the spring 1131 as an example, the spring 1131 is configured to: be compressed along the third direction Z when the driving assembly 12 applies a driving force to the moving module 112 along the third direction Z. For example, when the driving assembly 12 applies a driving force along the vertical upward third direction Z, the spring 1131 can be compressed.

Understandably, from FIG. 7 to FIG. 9, it is deemed that the driving assembly 12 gradually increases the driving force along the vertical upward third direction Z. Conversely, from FIG. 9 to FIG. 7, it is deemed that the driving assembly 12 gradually decreases the driving force along the vertical upward third direction Z.

Specifically, as shown in FIG. 9, the electrode assembly 22 may be placed between the two clamping modules 111 when the distance between the two clamping modules 111 is maximized. In this way, the electrode assembly 22 is placed on the conveyance mechanism 10.

As shown in FIG. 8, as can be seen from comparison between FIG. 8 and FIG. 9, the driving force applied by the driving assembly 12 along the vertical upward third direction Z decreases gradually. Therefore, the moving module 112 gradually moves along the vertical downward third direction Z under the action of the retaining structure 113. At this time, the two clamping modules 111 movably linked with the moving module 112 approach each other along the second direction Y That is, the distance between the two clamping modules 111 gradually decreases. Therefore, the two clamping modules 111 can gradually approach the electrode assembly 22 and gradually clamp the electrode assembly 22.

As shown in FIG. 7, as can be seen from comparison between FIG. 7 and FIG. 8, when the driving assembly 12 stops applying the driving force to the moving module 112, the moving module 112 returns to the target position under the action of the retaining structure 113. The two clamping modules 111 movably linked with the moving module 112 approach each other along the second direction Y to clamp the electrode assembly 22, thereby fixing the electrode assembly 22 to the conveyance mechanism 10.

Understandably, when the driving force applied by the driving assembly 12 decreases gradually, the retention structure 113 enables the moving module 112 to gradually approach the target position. For example, when the retaining structure 113 is a spring 1131, the spring 1131 is configured to be restored to the original state along the third direction Z when the driving assembly 12 stops applying the driving force to the moving module 112. Specifically, as shown in FIG. 9 to FIG. 7, when the driving force applied by the driving assembly 12 decreases gradually, the spring 1131 is gradually restored from the compressed state until the driving assembly 12 stops applying the driving force. The spring 1131 is restored to the original state along the third direction Z. In this way, the moving module 112 moves to the target position, and remains in the target position when the driving assembly 12 applies no driving force. In this way, the two clamping modules 111 movably linked with the moving module 112 can keep clamping the electrode assembly 22 so as to fix the electrode assembly 22.

Understandably, when the electrode assembly 22 is disposed between the two clamping modules 111, the target position of the moving module 112 may be set based on the dimensions of the clamped electrode assembly 22, so that the two clamping modules 111 can clamp the electrode assembly 22. Alternatively, when no component is clamped between the two clamping modules 111, under the action of the retaining structure 113, the moving module 112 can still return to the target position, and the two clamping modules 111 approach each other but without clamping any component.

In this embodiment of this application, the linkage of the moving module 112 to the two clamping modules 111 may be implemented in various ways. For example, the linkage of the moving module 112 to the two clamping modules 111 may be implemented by disposing a slide slot and a protrusion movable in the slide slot. Specifically, as shown in FIG. 7 to FIG. 9, the moving module 112 includes a slide slot structure 1121. Each clamping module 111 of the at least two clamping modules 111 includes a protrusion structure 1111, and at least a part of the protrusion structure 1111 is accommodated in the slide slot structure 1121 and moves in the slide slot structure 1121. The slide slot structure 1121 accommodates at least a part of the protrusion structure 1111 so that the protrusion structure 1111 can slide in the slide slot structure 1121. In this way, with reasonable design of the slide slot structure 1121, the two clamping modules 111 with a protrusion structure 1111 are enabled to be movably linked to the moving module 112 with a slide slot structure 1121. The structure is simple and easy to implement.

Optionally, the extension direction of the slide slot structure 1121 may be set depending on practical applications. For example, the extension direction of the slide slot structure 1121 may be determined based on the second direction Y and the third direction Z. For another example, the extension direction of the slide slot structure 1121 is different from the third direction Z and different from the second direction Y In this way, when the driving assembly 12 applies a driving force to the moving module 112 along the third direction Z, the two clamping modules 111 can move along the second direction Y different from the third direction Z by virtue of the setting of the extension direction of the slide slot structure 1121. For another example, the extension direction of this slide slot structure 1121 may be related to at least one of the following parameters: the movement speed of the moving module 112, the movement speed of the two clamping modules 111, the magnitude of the driving force exerted by the driving assembly 12, or the elasticity coefficient of the spring 1131. In other words, the extension direction of the slide slot structure 1121 may be determined based on at least one of the above parameters, but this embodiment of this application is not limited to the example.

Optionally, as shown in FIG. 7 to FIG. 9, the moving module 112 includes two slide slot structures 1121. The two slide slot structures 1121 correspond to the protrusion structures 1111 of the at least two clamping modules 111 one to one. Considering that an electrode assembly 22 is disposed between the two clamping modules 111 according to this embodiment of this application, the two clamping modules 111 are at a distance from each other. Correspondingly, the two protrusion structures 1111 of the two clamping modules 111 are also at a distance from each other. Therefore, two slide slot structures 1121 can be disposed to accommodate the two protrusion structures 1111 respectively. In this way, the two slide slot structures 1121 are free from mutual interference, thereby improving the structural reliability.

Optionally, as shown in FIG. 7 to FIG. 9, the two slide slot structures 1121 are at equal angles to the second direction Y Considering that the two clamping modules 111 usually need to move synchronously, for example, approach each other or depart from each other, the two slide slot structures 1121 may be made to be at equal angles to the second direction Y In this way, the protrusion structures 1111 of the two clamping modules 111 move synchronously, thereby synchronizing the movement of the two clamping modules 111, and improving the clamping efficiency of the two clamping modules 111.

Optionally, as shown in FIG. 7 to FIG. 9, each of the two clamping modules 111 is configured to clamp two second end faces 224 of the electrode assembly 22. The two second end faces 224 are disposed opposite to each other and perpendicular to the first end face 223. The two clamping modules 111 clamp the two opposite second end faces 224 of the electrode assembly 22, so that the clamping force exerted on the electrode assembly 22 is relatively uniform, thereby keeping the balance of the electrode assembly 22 on the carrier surface 101, and improving the stability of the electrode assembly 22 on the conveyance mechanism 10.

Understandably, the specific structure of the two clamping modules 111 in this embodiment of this application may be set flexibly depending on practical applications. For example, the two clamping modules 111 may be set to be a mutually symmetrical structures. Therefore, when the two clamping modules 111 clamp the electrode assembly 22, the clamping force exerted on the electrode assembly 22 is relatively uniform, so as to maintain the stability of the electrode assembly 22. For example, each clamping module 111 in this embodiment of this application may be a columnar structure. The size of the contact region between each clamping module 111 and the electrode assembly 22 may be set flexibly depending on practical applications, and is not limited herein.

Optionally, the above description uses an example in which the retaining structure 113 includes a spring 1131 extending along the third direction Z. Alternatively, the retaining structure 113 may be implemented by other means. Similarly, in an embodiment of this application, the linkage of the moving module 112 to the two clamping modules 111 may be implemented by other structures.

For example, FIG. 10 is another schematic top view of a conveyance mechanism 10 according to an embodiment of this application. FIG. 10 shows another possible structure of the retention structure 113 according to an embodiment of this application, and also shows a possible structure of the moving module 112 and the clamping modules 111 according to an embodiment of this application. As shown in FIG. 10, the retaining structure 113 of the conveyance mechanism 10 may include a spring 1132 extending along the second direction Y Specifically, the spring 1132 extending along the second direction Y may correspond one-to-one to the two clamp modules 111. That is, each spring 1132 is connected to a corresponding clamping module 111. In addition, the moving module 112 of the conveyance mechanism 10 may include a wedge-shaped surface 1122. Correspondingly, each clamping module 111 of the two clamping modules 111 includes a cam 1112. In this way, the cam 1112 may move along the wedge-shaped surface 1122, so that the moving module 111 is movably linked with the two clamping modules 111.

Specifically, when a drive force is applied by the driving assembly 12, that is, when a drive force along the third direction Z is applied by the driving assembly 12 to the moving module 112, the moving module 112 moves along the third direction Z. Correspondingly, the cams 1112 of the two clamping modules 111 move along the wedge-shaped surface 1122, so that the two clamping modules 111 move away from each other along the second direction Y to release the electrode assembly 22 or place the electrode assembly 22. At this time, the spring 1132 deforms under the action of the clamping modules 111. Conversely, when the driving assembly 12 gradually decreases the driving force until the driving force is stopped, the spring 1132 returns to its original form, pushes the two clamping modules 111 to gradually approach each other to clamp the electrode assembly 22. At the same time, due to the interaction between the cam 1112 and the wedge-shaped surface 1122, the moving module 112 moves along the third direction Z to return to the target position.

Optionally, as shown in FIG. 10, the moving module 112 may be located outside the clamping module 111 when staying in the target position, and may be separated from the two clamping modules 111. Therefore, the moving module 112 in this embodiment may be disposed separately from the two clamping modules 111. In this way, when the two clamping modules 111 clamp the electrode assembly 22 and move to different workstations, the moving module 112 does not move, and the moving module 112 can be fixed to a corresponding workstation. For example, the position of the moving module 112 may be flexibly set depending on practical applications. For example, the moving module 112 is disposed at the coating station 102 and/or the encasing station 103. Therefore, when the two clamping modules 111 clamp the electrode assembly 22 and move to the station, the moving module 112 can make the two clamping modules 111 move to release or clamp the electrode assembly 22. However, this embodiment of this application is not limited to the example.

In an embodiment of this application, the clamping assembly 11 further includes: a carrier module 114. The carrier module 114 and the moving module 112 are stacked along the first direction X, and the carrier module is close to the electrode assembly 22. A surface, oriented toward the electrode assembly 22, of the carrier module 114 is the carrier surface 101. Disposing the carrier module 114 between the moving module 112 and the electrode assembly 22 facilitates the carrier module 114 to carry the electrode assembly 22 without affecting the movement of the moving module 112 under the driving force of the driving assembly 12. The structure is easy to implement.

Understandably, the structure of the carrier module 114 in this embodiment of this application may be set depending on practical applications. For example, the carrier module 114 may be a plate-like structure. Correspondingly, the moving module 112 may also be a plate-like structure. In this way, the carrier module 114 and the moving module 112 are stacked together, thereby facilitating the processing and assembling of the two modules, reducing the overall size of the conveyance mechanism 10, and simplifying the overall structure of the device 1.

In this embodiment of this application, the position of the driving assembly 12 may be flexibly set depending on practical applications. For example, the driving assembly 12 may be set reasonably based on the work content of each different workstation. For example, the driving assembly 12 is disposed at the coating station 102 and/or the encasing station 103. Specifically, at the coating station 102, the coating mechanism 20 coats at least a part of an outer surface of the electrode assembly 22 with an insulation layer 23. Considering that the first end face 223 of the electrode assembly 22 does not need to be coated with the insulation layer 23 but all other end faces of the electrode assembly 22 need to be coated with the insulation layer 23, the end faces of the electrode assembly 22 clamped by the two clamping modules 111 may also need to be coated with the insulation layer 23. In this case, the driving assembly 22 disposed at the coating station 102 may exert a driving force to make the clamping modules 111 release the electrode assembly 22, so as to coat the outer surface of the electrode assembly 22 with the insulation layer 23. At the encasing station 103, the electrode assembly 22 coated with the insulation layer 23 enters the interior of the housing 211 from the opening 2111 of the housing 211. Therefore, the driving assembly 22 disposed at the encasing station 103 may exert a driving force to make the two clamping modules 111 release the electrode assembly 22, so as to let the electrode assembly 22 into the housing 211.

In this embodiment of this application, the moving module 112 moves along the third direction Z, and the third direction Z may be set flexibly depending on practical applications. For example, the third direction Z is perpendicular to the first direction X. Therefore, when the moving module 112 moves as driven by a driving force, the electrode assembly 22 can still remain relatively stable on the carrier surface 101 under its own gravity, thereby preventing the position of the electrode assembly 22 from being affected by the movement of the moving module 112.

For another example, the third direction Z is perpendicular to the second direction Y In this way, the movement direction of the moving module 112 is perpendicular to the movement direction of the clamping modules 111, thereby avoiding mutual interference with respect to the movement position. In addition, when the driving assembly 12 applies a driving force along the third direction Z, no hindrance is caused to the movement of the two clamping modules 111. The structure design is simplified and easy to implement.

Optionally, if the third direction Z is set perpendicular to the second direction Y, the extension direction of the slide slot structure 1121 may be located between the third direction Z and the second direction Y, and, for example, may be at an angle of 45° to the third direction Z and also an angle of 45° to the second direction Y In this way, the movement speed of the moving module 112 is equal to that of the clamping modules 111, thereby facilitating control. However, this embodiment of this application is not limited to the example.

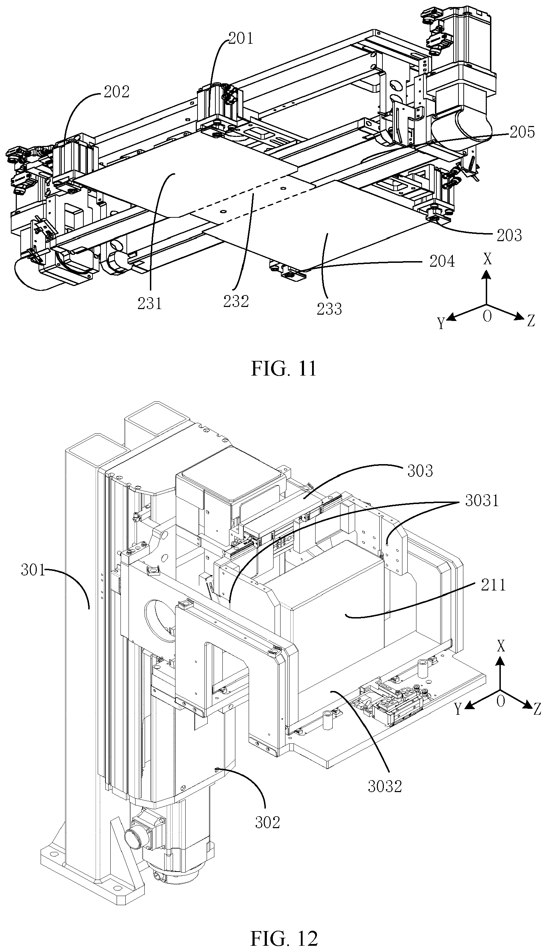

The conveyance mechanism 10 according to an embodiment of this application has been described above with reference to drawings. The following describes a coating mechanism 20 according to an embodiment of this application in detail with reference to drawings. FIG. 11 is a possible schematic structural diagram of a coating mechanism 20 according to an embodiment of this application. As shown in FIG. 11, the coating mechanism 20 is configured to: control the insulation layer 23 to move along the first direction X so that the insulation layer 23 approaches the electrode assembly 22 and coats at least a part of the outer surface of the electrode assembly 22. The electrode assembly 22 is placed on the conveyance mechanism 10 along the first direction X. Therefore, the coating mechanism 20 controls the insulation layer 23 to move along the first direction X and gradually approach the electrode assembly 22, so that the insulation layer 23 can coat the electrode assembly 22 from an end face of the electrode assembly 22, the end face being disposed opposite to the first end face 223. The coating process is simple and easy to implement. In addition, the outer surface of the electrode assembly 22 can be coated with the insulation layer 23 without turning the electrode assembly 22 over while the electrode assembly 22 keeps being placed on the conveyance mechanism 10 along the first direction X.

The structure of the coating mechanism 20 in this embodiment of this application may be set depending on practical applications. For example, as shown in FIG. 11, the coating mechanism 20 may include: at least one film gripping structure and a bracket 205. The at least one film gripping structure is disposed on the bracket 205. Optionally, in the example shown in FIG. 11, the at least one film gripping structure includes four film gripping structures, herein referred to as a first film gripping structure 201, a second film gripping structure 202, a third film gripping structure 203, and a fourth film gripping structure 204. The four film gripping structures are configured to clamp the corner regions of the insulation layer 23, respectively. However, this embodiment of this application is not limited to the example.

Optionally, the coating mechanism 20 may further include a fixing structure so that the bracket 205 is fixed as a whole to the fixing structure and movable relative to the fixing structure. For example, the bracket 205 may move relative to the fixing structure along the first direction X. For example, in the example shown in FIG. 11, the first direction X includes a vertical upward direction, and the bracket 205 may move vertically upward or vertically downward along the first direction X, so as to move away from or closer to the electrode assembly 22 that is fixed to the conveyance mechanism 10.

As shown in FIG. 11, the bracket 205 includes at least one film gripping structure. The at least one film gripping structure is configured to clamp and fix the insulation layer 23. For example, as an example in this embodiment of this application, four film gripping structures clamp four corners of the insulation layer 23 respectively. In this way, when the outer surface of the electrode assembly 22 is coated with the insulation layer 23, the first film gripping structure 201 and the second film gripping structure 202 clamp a first part 231 of the insulation layer 23 and then turn over toward the electrode assembly 22 along the dashed line. Correspondingly, the third film gripping structure 203 and the fourth film gripping structure 204 clamp the second part 233 of the insulation layer 23, and are turned over toward the electrode assembly 22 along the dashed line. A connecting part 232 located between the first part 231 and the second part 233 corresponds to an end face of the electrode assembly 22. For example, the end face corresponding to the connecting part 232 may be an end face opposite to the first end face 223 of the electrode assembly 22. In other words, the connecting part 232 coats the end face opposite to the first end face 223 of the electrode assembly 22, and then the four film gripping structures clamp the insulation layer 23 and turn over to enable the insulation layer 23 to coat other end faces of the electrode assembly 22.

The following describes an encasing mechanism 30 according to an embodiment of this application in detail with reference to drawings. FIG. 12 is a possible schematic structural diagram of an encasing mechanism 30 according to an embodiment of this application. As shown in FIG. 12, the encasing mechanism 30 is configured to: orient an opening 2111 of the housing 211 toward the electrode assembly 22, and control the housing 211 to move along the first direction X so that the electrode assembly 22 coated with the insulation layer 23 enters the housing 211 from the opening. An opening 2111 is created on the housing 211. The electrode assembly 22 coated with the insulation layer 23 is disposed on the conveyance mechanism 10 along the first direction X. The encasing mechanism 30 controls the housing 211 to move along the first direction X and gradually approach the electrode assembly 22. The opening 2111 of the housing 211 is oriented toward the electrode assembly 22. Therefore, without turning over the electrode assembly 22, the housing 211 can be fitted peripherally onto the electrode assembly 22 coated with the insulation layer 23, so as to implement the encasing process of the electrode assembly 22. The process is simple and easy to implement.

The structure of the encasing mechanism 30 in this embodiment of this application may be set depending on practical applications. For example, as shown in FIG. 12, the encasing mechanism 30 may include: a supporting component 301, a driving component 302, and a housing fixing component 303. The housing fixing component 303 is fixed onto the supporting component 301. The driving component 302 may also be fixed onto the supporting component 301, so as to facilitate the processing and assembling of the encasing mechanism 30.

Specifically, as shown in FIG. 12, the housing fixing component 303 may be configured to fix the housing 211. For example, the housing fixing component 303 may include a bottom gripping structure 3031 and an opening gripping structure 3032. The bottom gripping structure 3031 may be configured to clamp and fix a bottom of the housing 211. The bottom of the housing 211 includes a bottom wall of the housing 211 and a part of a sidewall of the housing 211, the part surrounding and abutting the bottom wall. The bottom wall of the housing 211 is a wall opposite to the opening 2111 of the housing 211. The sidewall of the housing 211 is a wall adjacent to the opening 2111 of the housing 211 and configured to close in to form the opening 2111. The opening gripping structure 3032 is configured to clamp and fix a part of the sidewall of the housing 211, the part being close to the opening 2111. In this way, the opening 2111 can be directed to the electrode assembly 22, so that the housing 211 can be fitted peripherally onto the electrode assembly 22 accurately to complete the encasing process of the electrode assembly 22.

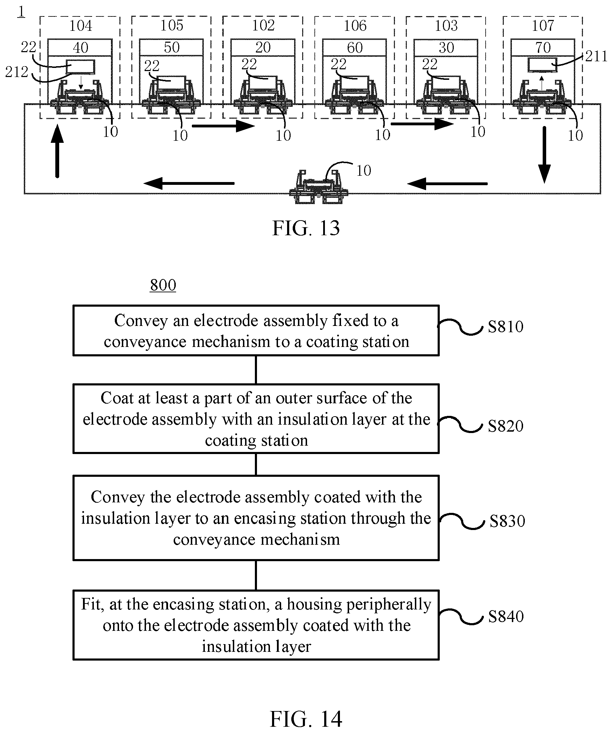

Understandably, the device 1 according to this embodiment of this application may further include other workstations and mechanisms for assembling the battery cell 2. For example, FIG. 13 shows another schematic block diagram of a device 1 according to an embodiment of this application. As shown in FIG. 13, the device 1 according to this embodiment of this application may further include: a loading mechanism 40, configured to fix the electrode assembly 22 to the conveyance mechanism 10 at a loading station 104. The conveyance mechanism 10 is further configured to: convey the electrode assembly 22 from the loading station 104 to another station, for example, to the coating station 102. Specifically, the loading mechanism 40 may place the electrode assembly 22 onto the conveyance mechanism 10 along the first direction X. As an example shown in FIG. 13, the first direction X is a vertical direction. Therefore, at the loading station 104, the clamping module 111 of the conveyance mechanism 10 can clamp and fix the electrode assembly 22, so that the conveyance mechanism 10 can convey the electrode assembly 22 and continue moving to other stations to start assembling the battery cell 2.

Optionally, a driving assembly 12 may be disposed at the loading station 104 so that the driving assembly 12 provides a driving force for the conveyance mechanism 10. In this way, under the action of the driving force, the clamping modules 111 of the clamping assembly 11 are move away from each other, thereby increasing the distance between the two clamping modules 111. Therefore, the loading mechanism 40 can dispose the electrode assembly 22, or the interconnected electrode assembly and end cap 212, between the two clamping modules 111, so as to fix the electrode assembly 22.

Optionally, in an embodiment of this application, as shown in FIG. 13, the device 1 according to an embodiment of this application may further include: a first detection mechanism 50, configured to detect a defect of the electrode assembly 22 at a first detection station 105. The conveyance mechanism 10 is further configured to: convey the electrode assembly 22, which has passed through the first detection station 105, to another station, for example, to the coating station 102. Specifically, the first detection station 105 may be located between the loading station 104 and the coating station 102. Before the electrode assembly 22 is coated with the insulation layer 23, defects of the electrode assembly 22 may be detected by the first detection mechanism 50 at the first detection station 105, so as to detect and handle the electrode assembly 22 with defects in time, and avoid impairing the performance of the battery cell 2 containing the electrode assembly 22.

Optionally, the first detection mechanism 50 according to this embodiment of this application may be a charge coupled device (CCD) detection mechanism, so that a CCD camera can take pictures and detect defects. However, the type of the first detection mechanism is not limited herein.

Understandably, the conveyance direction of the conveyance mechanism 10 in conveying the electrode assembly 22 in this embodiment of this application may be set depending on practical applications. As an example shown in FIG. 13, the conveyance mechanism 10 conveys the electrode assembly 22 from left to right. For example, the conveyance mechanism 10 conveys the electrode assembly 22 from the loading station 104 to the first detection station 105, and then to the coating station 102, and so forth. However, this embodiment of this application is not limited to the example.

Optionally, as shown in FIG. 13, the device 1 according to this embodiment of this application may further include: a second detection mechanism 60, configured to detect, at a second detection station 106, an effect of coating the electrode assembly 22 with the insulation layer 23. The conveyance mechanism 10 is further configured to: convey the electrode assembly 22 coated with the insulation layer 23, which has passed through the second detection station 106, to another station, for example, further to the encasing station 103. Specifically, the second detection station 106 may be located between the coating station 102 and the encasing station 103. After the electrode assembly 22 is coated with the insulation layer 23, the coated electrode assembly 22 may be subjected to other processes. For example, to fix the insulation layer 23 to the electrode assembly 22, the insulation layer 23 may be subjected to a hot-melt treatment. The electrode assembly 22 coated with the insulation layer 23 may be further subjected to an adhesive bonding treatment. Therefore, the electrode assembly 22 coated with the insulation layer 23 may be detected for defects by the second detection mechanism 60 at the second detection station 106, so as to detect and handle defective regions in time, for example, detect a region of adhesive nonconformity in time, so as to avoid impairing the performance of the assembled battery cell 2.

Optionally, the second detection mechanism 60 according to this embodiment of this application may be a CCD detection mechanism, so that a CCD camera can take pictures and detect defects. However, the type of the second detection mechanism is not limited herein.

The conveyance mechanism 10 conveys the electrode assembly 22 coated with the insulation layer 23 from the coating station 102 to the second detection station 106, and may further convey the electrode assembly from the second detection station 106 to the encasing station 103. In this way, at the encasing station 103, the encasing mechanism 30 fits the housing 211 peripherally onto the electrode assembly 22 coated with the insulation layer 23.

Optionally, as shown in FIG. 13, the device 1 further includes: an unloading mechanism 70, configured to detach the electrode assembly 22 fitted with the housing 211 from the conveyance mechanism 10 at an unloading station 107, so that the electrode assembly 22 fitted with the housing 211 is ready for subsequent processes. Specifically, the conveyance mechanism 10 in this embodiment of this application may convey the electrode assembly 22 fitted with the housing 211 from the encasing station 103 further to the unloading station 107. At the unloading station 107, the unloading mechanism 70 may detach the electrode assembly 22 fitted with the housing 211 from the conveyance mechanism 10 along the first direction X. As an example shown in FIG. 13, the first direction X is a vertical direction. Therefore, at the unloading station 107, the clamping module 111 of the conveyance mechanism 10 can release the electrode assembly 22, so that the conveyance mechanism 10 can be detached from the electrode assembly 22 fitted with the housing 211. In this way, the conveyance mechanism 10 is reused cyclically and continues to fix and convey other electrode assemblies 22. In addition, after being detached, the electrode assembly 22 fitted with the housing 211 can proceed to other subsequent assembling steps to form an assembled battery cell 2.

Optionally, in an embodiment of this application, the conveyance mechanism 10 further includes: a control assembly 13, configured to control the clamping assembly 11 to move between different workstations. For example, when the electrode assembly 22 is attached to the conveyance mechanism 10, that is, on the path from the loading station 104 to the unloading station 107 shown in FIG. 13, the control assembly 13 may be configured to control the clamping assembly 11 to move steadily between the different workstations to convey the clamped electrode assembly 22. For example, the control assembly 13 may be a magnetic driving device configured to magnetically drive the movement of the clamping assembly 11 to maintain the stability and movement rate of the electrode assembly 22.

After the electrode assembly 22 is removed from the conveyance mechanism 10, for example, after the unloading station 107, the conveyance mechanism 10 may return to the loading station 104 to fix a next electrode assembly 22. When the clamping assembly 11 of the conveyance mechanism 10 is returning from the unloading station 107 to the loading station 104, no component is clamped. Therefore, the control assembly 13 may be another type of device that can save time and cost. For example, the control assembly 13 may include a conveyor belt. The conveyor belt conveys the clamping assembly 11 back to the loading station 104 quickly to complete one cycle, that is, complete one process by which the electrode assembly 22 is encased in the housing.

In this embodiment of this application, the device 1 conveys the electrode assembly 22 to different workstations sequentially through the conveyance mechanism 10. For example, the conveyance mechanism 10 may convey the electrode assembly 22 to a coating station 102. At the coating station 102, a coating mechanism 20 coats at least a part of an outer surface of the electrode assembly 22 with an insulation layer 23. Subsequently, the conveyance mechanism 10 may convey the electrode assembly 22 coated with the insulation layer 23 to an encasing station 103. At the encasing station 103, the encasing mechanism 30 fits a housing 211 peripherally onto the electrode assembly 22 coated with the insulation layer 23. In this process, the conveyance mechanism 10 conveys the electrode assembly 22, thereby avoiding the need to repeatedly change the transport tool, simplifying the assembling process of the battery cell 2, improving the assembling efficiency of the battery cell 2, reducing the damage to the electrode assembly 22 that may be caused by an external force in a case of using different transport tools, improving the qualification rate of battery cells 2, and in turn, improving the yield rate of batteries.

The device 1 for assembling a battery cell 2 according to some embodiments of this application has been described above with reference to drawings. The following describes a method for assembling a battery cell 2 according to an embodiment of this application. For information not detailed in the following embodiments, reference may be made to the preceding embodiments.

FIG. 14 is a schematic flowchart of a method 800 for assembling a battery cell 2 according to an embodiment of this application. As shown in FIG. 14, the method 800 may include: S810. conveying an electrode assembly 22 fixed to a conveyance mechanism 10 to a coating station 102; S820. coating at least a part of an outer surface of the electrode assembly 22 with an insulation layer 23 at the coating station 102; S830. conveying the electrode assembly 22 coated with the insulation layer 23 to an encasing station 103 through the conveyance mechanism 10; and S840. fitting, at the encasing station 103, a housing 211 peripherally onto the electrode assembly 22 coated with the insulation layer 23.

Optionally, in an embodiment, the conveyance mechanism 10 is configured to carry the electrode assembly 22 and an end cap 212. The end cap 212 is attached to a first end face 223 of the electrode assembly 22. A carrier surface 101 of the conveyance mechanism is attached to a surface of the end cap 212, the surface being away from the electrode assembly 22. The electrode assembly 22 is placed on the conveyance mechanism 10 along a first direction X, and the first direction X is perpendicular to the first end face 223.

Optionally, in an embodiment, the conveyance mechanism 10 includes a clamping assembly 11 and a driving assembly 12. The clamping assembly 11 is configured to clamp the electrode assembly 22 along a second direction Y, where the second direction Y is perpendicular to the first direction X. The driving assembly 12 is configured to apply a driving force to the clamping assembly 11 along a third direction Z so that the clamping assembly 11 is configured to release the electrode assembly 22 under the driving force.

Optionally, in an embodiment, a conveyance direction in which the conveyance mechanism 10 conveys the electrode assembly 22 coated with the insulation layer 23 from the coating station 102 to the encasing station 103 is different from the third direction Z.

Optionally, in an embodiment, the clamping assembly 11 is configured to clamp two second end faces of the electrode assembly 22. The two second end faces are disposed opposite to each other and perpendicular to the first end face 223.

Optionally, in an embodiment, neither the first end face 223 nor the second end faces is a largest-area end face of the electrode assembly 22.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A device for assembling a battery cell, comprising:
a conveyance mechanism (10), configured to fix an electrode assembly (22) and convey the electrode assembly (22) to a coating station (102);
a coating mechanism (20), configured to coat at least a part of an outer surface of the electrode assembly (22) with an insulation layer (23) at the coating station (102), wherein
the conveyance mechanism (10) is further configured to: convey the electrode assembly (22) coated with the insulation layer (23) to an encasing station (103); and
an encasing mechanism (30), configured to fit, at the encasing station (103), a housing (211) peripherally onto the electrode assembly (22) coated with the insulation layer (23).

2. The device according to claim 1, wherein the conveyance mechanism (10) is configured to carry the electrode assembly (22) and an end cap (212); the end cap (212) is attached to a first end face (223) of the electrode assembly (22); a carrier surface (101) of the conveyance mechanism (10) is attached to a surface of the end cap (212), the surface being away from the electrode assembly (22); and the electrode assembly (22) is placed on the conveyance mechanism (10) along a first direction (X), and the first direction (X) is perpendicular to the first end face (223).

3. The device according to claim 2, wherein the coating mechanism (20) is configured to:
control the insulation layer (23) to move along the first direction (X) so that the insulation layer (23) approaches the electrode assembly (22) and coats at least a part of the outer surface of the electrode assembly (22).

4. The device according to claim 2 or 3, wherein the encasing mechanism (30) is configured to:
orient an opening (2111) of the housing (211) toward the electrode assembly (22), and control the housing (211) to move along the first direction (X) so that the electrode assembly (22) coated with the insulation layer (23) enters the housing (211) from the opening.

5. The device according to any one of claims 2 to 4, wherein the conveyance mechanism (10) comprises:
a clamping assembly (11), configured to clamp the electrode assembly (22) along a second direction (Y), wherein the second direction (Y) is perpendicular to the first direction (X);
a driving assembly (12), configured to apply a driving force to the clamping assembly (11) along a third direction (Z) so that the clamping assembly (11) is configured to release the electrode assembly (22) under the driving force.

6. The device according to claim 5, wherein a conveyance direction in which the conveyance mechanism (10) conveys the electrode assembly (22) coated with the insulation layer (23) from the coating station (102) to the encasing station (103) is different from the third direction (Z).

7. The device according to claim 5 or 6, wherein the clamping assembly (11) comprises:
two clamping modules (111) spaced apart along the second direction (Y), wherein the electrode assembly (22) is located between the two clamping modules (111); and
a moving module (112) movably linked with the two clamping modules (111), wherein
the two clamping modules (111) are configured to: when the moving module (112) moves along the third direction (Z), move away from each other along the second direction (Y) to release the electrode assembly (22), or move closer to each other along the second direction (Y) to clamp the electrode assembly (22), wherein the third direction (Z) is different from the second direction (Y).

8. The device according to claim 7, wherein the clamping assembly (11) comprises:
a retaining structure (113), wherein the retaining structure (113) is connected to the moving module (112), the retaining structure (113) is configured to retain the moving module (112) in a target position, and the two clamping modules (111) are configured to clamp the electrode assembly (22) along the second direction (Y) when the moving module (112) is located in the target position.

9. The device according to claim 8, wherein the retaining structure (113) comprises a spring (1131) extending along the third direction (Z).

10. The device according to claim 9, wherein the spring (1131) is configured to:
be compressed along the third direction (Z) when the driving assembly (12) applies a driving force to the moving module (112) along the third direction (Z), and be restored to an original position along the third direction (Z) when the driving assembly (12) stops applying the driving force to the moving module (112).

11. The device according to any one of claims 7 to 10, wherein the moving module (112) comprises a slide slot structure (1121), each clamping module (111) of the at least two clamping modules (111) comprises a protrusion structure (1111), and at least a part of the protrusion structure (1111) is accommodated in the slide slot structure (1121) and moves in the slide slot structure (1121).

12. The device according to claim 11, wherein an extension direction of the slide slot structure (1121) is different from the third direction (Z) and different from the second direction (Y).

13. The device according to claim 11 or 12, wherein the moving module (112) comprises two slide slot structures (1121), and the two slide slot structures (1121) correspond to the protrusion structures (1111) of the at least two clamping modules (111) one to one.

14. The device according to claim 13, wherein the two slide slot structures (1121) are at equal angles to the second direction (Y).

15. The device according to any one of claims 7 to 14, wherein each of the two clamping modules (111) is configured to clamp two second end faces (224) of the electrode assembly (22), the two second end faces (224) being disposed opposite to each other and perpendicular to the first end face (223).

16. The device according to any one of claims 7 to 15, wherein the clamping assembly (11) further comprises:
a carrier module (114), wherein the carrier module (114) and the moving module (112) are stacked along the first direction (X), the carrier module is close to the electrode assembly (22), and a surface, oriented toward the electrode assembly (22), of the carrier module (114) is the carrier surface (101).

17. The device according to any one of claims 5 to 16, wherein the driving assembly (12) is disposed at the coating station (102) and/or the encasing station (103).

18. The device according to any one of claims 5 to 17, wherein the third direction (Z) is perpendicular to the first direction (X).

19. The device according to any one of claims 5 to 18, wherein the third direction (Z) is perpendicular to the second direction (Y).

20. A method for assembling a battery cell, comprising:
conveying an electrode assembly (22) fixed to a conveyance mechanism (10) to a coating station (102);
coating at least a part of an outer surface of the electrode assembly (22) with an insulation layer (23) at the coating station (102);
conveying the electrode assembly (22) coated with the insulation layer (23) to an encasing station (103) through the conveyance mechanism (10); and
fitting, at the encasing station (103), a housing (211) peripherally onto the electrode assembly (22) coated with the insulation layer (23).

21. The method according to claim 20, wherein the conveyance mechanism (10) is configured to carry the electrode assembly (22) and an end cap (212); the end cap (212) is attached to a first end face (223) of the electrode assembly (22); a carrier surface (101) of the conveyance mechanism (10) is attached to a surface of the end cap (212), the surface being away from the electrode assembly (22); and the electrode assembly (22) is placed on the conveyance mechanism (10) along a first direction (X), and the first direction (X) is perpendicular to the first end face (223).

22. The method according to claim 21, wherein the conveyance mechanism (10) comprises a clamping assembly (11) and a driving assembly (12), wherein the clamping assembly (11) is configured to clamp the electrode assembly (22) along a second direction (Y), the second direction (Y) is perpendicular to the first direction (X), and the driving assembly (12) is configured to apply a driving force to the clamping assembly (11) along a third direction (Z) so that the clamping assembly (11) is configured to release the electrode assembly (22) under the driving force.

23. The method according to claim 22, wherein a conveyance direction in which the conveyance mechanism (10) conveys the electrode assembly (22) coated with the insulation layer (23) from the coating station (102) to the encasing station (103) is different from the third direction (Z).

24. The method according to claim 22 or 23, wherein the clamping assembly (11) is configured to clamp two second end faces of the electrode assembly (22), the second end faces being disposed opposite to each other and perpendicular to the first end face (223).

25. The method according to claim 24, wherein neither the first end face (223) nor the second end faces is a largest-area end face of the electrode assembly (22).
